# EUROPEAN PATENT APPLICATION

(11) **EP 1 985 505 A2**
(43) Date of publication of application: **29.10.2008**
(21) Application number: 08002034.0
(22) Date of filing: 04.02.2008
(51) Int. Cl.: B60R 21/017

(54) **Occupant information detection system, occupant restraint system, and vehicle**

(30) Priority: 24.04.2007 JP 2007114675
(71) Applicant: TAKATA CORPORATION, Minato-ku, Tokyo 106-8510 (JP)
(72) Inventor: Aoki, Hiroshi, Tokyo 106-8510 (JP); Mita, Hirofumi, Tokyo 106-8510 (JP); Yokoo, Masato, Tokyo 106-8510 (JP); Hakomori, Yuu, Tokyo 106-8510 (JP)
(74) Representative: Banzer, Hans-Jörg

(57) **Abstract**

In order to provide a technology which is effective for precisely and easily detecting information about a vehicle occupant (P) on a vehicle seat (10), an occupant restraint system (100) which is installed in a vehicle has an occupant information detection system comprising: a 3D camera (112) for taking a three-dimensional image; an information extraction processing section (151) for extracting information about a three-dimensional surface profile of a detected object on the vehicle seat (10) based on the three-dimensional image taken by the 3D camera (112); a conversion processing section (152) for converting the information extracted by the information extraction processing section (151) into numerical coordinates of a predetermined coordinate system; a computation processing section (153) for deriving a computed value by subtracting an average of first and second coordinate components from a third coordinate component, wherein the first and second coordinate components are arbitrary two points and the third coordinate component is a middle point of the arbitrary two points with regard to coordinate components of a coordinate axis extending between the detected object and the 3D camera (112) in the numerical coordinates converted by the conversion processing section (152); and a determination processing section (154) for determining, based on the computed value derived by the computation processing section (153), the concavo-convex shape of a line segment formed by the arbitrary points and the middle point.

## Description

### Technical Field of the Invention

The present invention relates to a technology for developing an occupant information detection system to be installed in a vehicle.

### Background of the Invention

Conventionally, there are known various occupant restraint devices for restraining a vehicle occupant by means of an airbag or the like in the event of a vehicle collision. For example, disclosed in JP-A-2002-264747 is a configuration in which a camera for photographing a vehicle occupant is used as an occupant state estimating means for estimating the state of the vehicle occupant to control an occupant restraining means such as an airbag based on the state of the occupant estimated by the occupant state estimating means.

### Disclosure of the Invention

### Problems to be solved by the Invention

By the way, with regard to an occupant restraint device of this type for restraining a vehicle occupant in the event of a vehicle collision, there is a high demand for technology for precisely obtaining information about the physique and attitude of the vehicle occupant on a vehicle seat by means of a detection means such as a camera. For example, though there may be a difference between the actual physique and the appearance physique of the vehicle occupant because of the thickness of clothes and the like, it is required to precisely obtain the actual physique of the vehicle occupant. Though there is disclosed an idea of estimating the state of the vehicle occupant by the detection means in the aforementioned JP-A-2002-264747, there is no description about an effective specific arrangement for precisely obtaining information about the physique and the attitude of the vehicle occupant. In addition, with regard to the process for computing the physique and the attitude of a vehicle occupant, there is a demand for a simple process requiring a reduced computing processing load and a reduced storage capacity.

The present invention is made in view of the aforementioned point and it is an object of the present invention to provide a technology which is effective for precisely and easily detecting information about a vehicle occupant on a vehicle seat.

### Means to solve the Problems

According to the invention, this object is achieved by an occupant information detection system as defined in claim 1, an occupant restraint system as defined in claim 6 or a vehicle as defined in claim 7. The dependent claims define preferred and advantageous embodiments of the present invention.

For achieving the object, the present invention is configured. Though the present invention is typically adapted to an occupant information detection system in an automobile for detecting information about a vehicle occupant on a vehicle seat, the present invention can be also adapted to a technology for developing an occupant information detection system for detecting information about a vehicle occupant on a vehicle seat of a vehicle other than the automobile. The "vehicle" used here contains automobile, airplane, a boat, a train, a bus, and a truck.

An occupant information detection system of the present invention is a system for detecting information about a vehicle occupant on a vehicle seat and comprises at least: an image detecting section, an information extraction processing section, a conversion processing section, a computation processing section, and a determination processing section. The "vehicle occupant" used here includes an occupant seated directly on a vehicle seat such as a driver-seat occupant (a driver), a front-passenger-seat occupant, and a rear-seat occupant, and an occupant seated indirectly on a vehicle seat via a child seat or a junior seat. The "information about the vehicle occupant" in the present invention widely includes the physique of the vehicle occupant, the attitude of the vehicle occupant, the position of the vehicle occupant, the positions and configurations of respective body parts of the vehicle occupant, and the presence or absence of the vehicle occupant.

The image detecting section is disposed to face to a vehicle seat area and has a function of taking a three-dimensional image. The "vehicle seat area" used here is a peripheral area of the vehicle seat and is typically defined as a front area and an upper area of a seat back and a head rest or an upper area of a seat cushion. As the image detecting section, a 3-D type monocular C-MOS camera, a 3-D type pantoscopic stereo camera, or a laser scanner may be employed. As the mounting place for the image detecting section, any place facing to the vehicle seat can be selected and a pillar, a dashboard, or an area around an inner rearview mirror is typically selected. Further, the number of the image detecting section(s) mounted may be one or plural, if necessary.

The information extraction processing section has a function of extracting information about a three-dimensional surface profile of a detected object on a vehicle seat based on the three-dimensional image taken by the image detecting section. Since the three-dimensional image detected by the image detecting section contains information about distances, the information extraction processing section can extract information according to the distance from the image detecting section. Therefore, image information (three-dimensional image information) about the detected object in the vehicle seat area can be precisely extracted. The information extracted by the information extraction processing section is converted into numerical coordinates in a predetermined coordinate system by the conversion processing section. As the "predetermined coordinate system" used here, any of various coordinate systems such as an orthogonal coordinate system, a polar coordinate system, a nonorthogonal coordinate system, and a generalized coordinate system may be employed.

The computation processing section has a function of deriving a computed value by subtracting an average of first and second coordinate components from a third coordinate component, wherein the first and second coordinate components are arbitrary two points (or two arbitrary points) and the third coordinate component is a middle point of the arbitrary two points with regard to coordinate components of a coordinate axis extending between the detected object and the photographing section in the numerical coordinates converted by the conversion processing section.

The determination processing section has a function of determining, based on the computed value derived by the computation processing section, the concavo-convex shape of a line segment formed by the arbitrary two points and the middle point, i.e. a line segment formed by the three points. The determination processing section determines that the line segment forms a convex shape as seen from the image detecting section (the front of the vehicle) when the computed value is minus, that the line segment forms a concave shape as seen from the image detecting section when the computed value is plus, and that the line segment forms a plane when the computed value is zero. The determination process is based on the idea that a vehicle occupant's face is round or oval and a convex shape as seen from the image detecting section (the front of the vehicle) is highly likely a portion of a vehicle occupant's face.

According to the arrangement of the occupant information detection system of the present invention as mentioned above, it is possible to precisely detect information about the face of the vehicle occupant on the vehicle seat with reduced computation processing load and reduced storage capacity by focusing on information specific to the face of the vehicle occupant from information obtained from three-dimensional image of the vehicle occupant on the vehicle seat and determining the concavo-convex shape formed by arbitrary three points in the converted numerical coordinates, for the purpose of locating the face.

In an occupant information detection system of another aspect according to the present invention, it is preferable that the computation processing section as mentioned above has a second computation step and the determination processing section as mentioned above has a second determination step.

In the second computation step of the computation processing section, when the determination processing section determines that the line segment formed by the arbitrary two points and the middle point forms a convex shape as seen from the image detecting section, the computation processing section sets further plural pairs of points which are different from the arbitrary two points in radial distance from the middle point and/or angle in the rotational direction about the middle point and derives each computed value associated with two points of each pair and the middle point by subtracting an average of first and second coordinate components of the two points from the third coordinate component of the middle point.

In the second determination step of the determination processing section, the determination processing section determines, based on each computed value derived by the computation processing section, the concavo-convex shape of a line segment formed by the two points of each pair and the middle point, wherein the determination processing section determines that the middle point forms information of a face of the vehicle occupant when the frequency of line segments forming a convex shape as seen from the image detecting section is high. The determination whether or not the frequency of line segments is high can be achieved based on the degree (number) of the line segments, the percentage of the line segments occupying the entire line segments, or various parameters corresponding to the degree and the percentage. According to this arrangement, the accuracy of detecting information of the face of the vehicle occupant on the vehicle seat is improved by the second computation step of the computation processing section and the second determination step of the determination processing section.

In an occupant information detection system of another aspect according to the present invention, it is preferable that, in the second computation step, the computation processing section as mentioned above limits the radial distance from the middle point to be in a certain range of distance which is previously defined according to the size of a vehicle occupant's face.

This arrangement can prevent useless work of computing a computed value of a convex shape other than the vehicle occupant's face with regard to points out of the range of the general face size of vehicle occupants.

In an occupant information detection system of another aspect according to the present invention, it is preferable that the computation processing section as mentioned above sets the arbitrary two points and the middle point with regard to the detected object in the order of from the upper side to the lower side of the vehicle, and the determination processing section has a third determination step in which the determination processing section determines the position of the face of the vehicle occupant based on the position of the middle point which is first determined as a point forming a part of information of the vehicle occupant's face in the second determination step. The computation process and the determination process are based on the idea that the vehicle occupant's face is the uppermost part of body parts of the vehicle occupant so that the order of from the upper side to the lower side of the vehicle enables early detection of the vehicle occupant's face.

This arrangement is reasonable because the computation processing load and the storage capacity to be required to detect information of the vehicle occupant's face can be reduced.

In an occupant information detection system of another aspect according to the present invention, it is preferable that the determination processing section as mentioned above has a fourth determination step in which the determination processing section determines the physique and the attitude of the vehicle occupant based on the position of the face of the vehicle occupant determined in the third determination step.

This arrangement enables precise and easy detection of information about the physique and the attitude of the vehicle occupant, using the information about the face of the vehicle occupant.

An occupant restraint system according to the present invention comprises at least: the occupant information detection system as mentioned above; an occupant restraint device; and a control device. The occupant restraint device is a device for restraining a vehicle occupant in the event of a vehicle collision. The "occupant restraint device" used here widely includes occupant restraint devices such as an airbag device (airbag module) and a seat belt device.

The control device is a device for changing the restraining mode by the occupant restraint device according to the physique and the attitude of the vehicle occupant determined in the fourth determination step by the determination processing section. For example, the performance (the pressure and flow rate of gas) of an inflator as a gas supplying means for supplying gas into an airbag to deploy and inflate the airbag, and the performance (the winding amount and winding speed) of a pretensioner or a retractor for controlling a seat belt are variable according to the information about the physique of the vehicle occupant. The control device may be provided exclusively for controlling the occupant restraint device or may be an existing device for controlling the actuation of an engine/running system and an electrical system so that the existing device is also used for controlling the occupant restraint device.

This arrangement promotes complete restraint of a vehicle occupant because the occupant restraining mode by the occupant restraint device is controlled according to highly reliable information about the vehicle occupant.

A vehicle according to the present invention comprises: at least an engine/running system, an electrical system, an actuation control device, a vehicle seat, an image detecting device, and a processing device.

The engine/running system is a system involving an engine and a running mechanism of the vehicle. The electrical system is a system involving electrical parts used in the vehicle. The actuation control device is a device having a function of controlling the actuation of the engine/running system and the electrical system. The image detecting device is disposed to face to said vehicle seat and is a device of taking a three-dimensional image. The processing device is a device of processing information obtained by the image detecting device in the actuation control device. The processing device has an occupant information detection system as mentioned above. In this arrangement, information about the vehicle occupant detected by the occupant information detection system is suitably processed by the processing device and is used for various controls with regard to the vehicle such as the occupant restraint device which is operable for restraining the vehicle occupant.

According to this arrangement, a vehicle can be provided in which information about the vehicle occupant precisely detected by the occupant information detection system is used for various controls with regard to the vehicle.

### Effects of the Invention

As described above, the present invention enables precise and easy detection of information about a vehicle occupant on a vehicle seat, by focusing on information specific to the face of the vehicle occupant from information obtained from three-dimensional image of the vehicle occupant on the vehicle seat and determining the concavo-convex shape formed by arbitrary three points in the converted numerical coordinates, for the purpose of locating the face.

### Brief Explanation of the drawings

Fig. 1 is an illustration showing the configuration of an occupant restraint system 100, which is installed in a vehicle, as an embodiment of "occupant restraint system" of the present invention.

Fig. 2 is an illustration showing a state that an image of a driver P is photographed by a 3D camera 112 which is mounted in an A-pillar on a side of a driver seat 10.

Fig. 3 is an illustration showing pixel information P1 in which extracted information is converted into numerical coordinates of an orthogonal coordinate system by a conversion processing section 152.

Fig. 4 is an illustration showing pixel information P2 in which the coordinate system is converted into a coordinate system about a view point as seeing the driver P from the front of the vehicle by the conversion processing section 152.

Fig. 5 is an illustration showing rotation matrix for the coordinate conversion process.

Fig. 6 is an illustration showing arbitrary three points in the pixel information P2 of the embodiment.

Fig. 7 is an illustration for explaining the contour discriminating value V of the embodiment.

Fig. 8 is an illustration for explaining the face confidence value S of the embodiment.

### Best Modes for carrying out the Invention

Hereinafter, embodiments of the present invention will be described with reference to drawings.

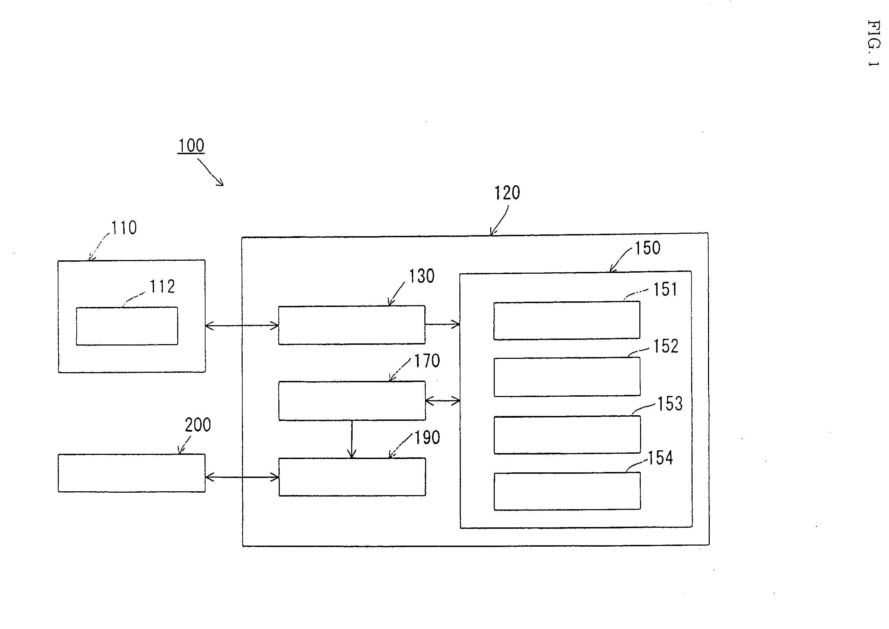

Fig. 1 shows the configuration of an occupant restraint system 100, which is installed in a vehicle, as an embodiment of an "occupant restraint system" of the present invention.

As shown in Fig. 1, the occupant restraint system 100 of this embodiment is installed in an automobile as the "vehicle" of the present invention for operating for a driver and mainly comprises a photographing means 110, a control means 120, and an occupant restraint apparatus 200. Further, the vehicle comprises, but not shown, an engine/running system involving an engine and a running mechanism of the vehicle (corresponding to "engine/running system" of the present invention), an electrical system involving electrical parts used in the vehicle (corresponding to "electrical system" of the present invention), and an actuation control means for conducting the actuation control of the engine/running system and the electrical system. The actuation control means may be composed of the control means 120 as a component of the occupant restraint system 100 or may be provided exclusively for the engine/running system and the electrical system.

The photographing means 110 comprises a 3D camera 112 as the photographing device and a data transfer circuit. The 3D camera 112 is a 3-D (three-dimensional) camera (sometimes called "monitor") of a C-MOS or CCD (charge-coupled device) type in which light sensors are arranged into an array (lattice) structure. By this camera 112, three-dimensional images can be taken from a single view point. Thus, distance relative to the object is measured a plurality of times to detect a three-dimensional surface profile, thereby identifying the presence or absence, the size, the position, and the attitude of the detected object. As the 3D camera 112, a 3-D type monocular C-MOS camera or a 3-D type pantoscopic stereo camera may be employed. The photographing means 110 (the 3D camera 112) corresponds to the "image detecting section which is disposed to face to a vehicle seat area for taking a three-dimensional image" of the present invention. Instead of the 3D camera 112, a laser scanner capable of obtaining three-dimensional images may be employed.

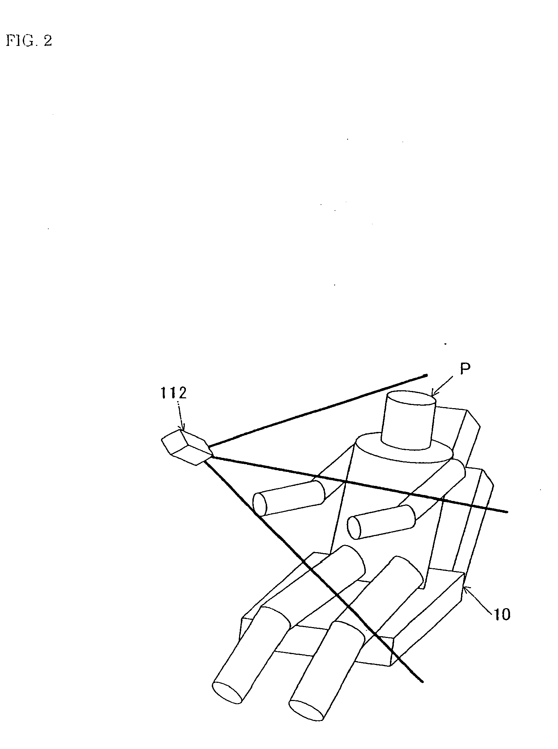

The 3D camera 112 is mounted in an embedded style in an instrument panel, an A-pillar, or an area around a windshield in a front portion of the vehicle in such a manner as to have an angle capable of photographing a vehicle occupant or a plurality of vehicle occupants. Fig. 2 shows a state that an image of a driver P is photographed by the 3D camera 112 which is mounted in an A-pillar on a driver's side.

The control means 120 further comprises at least an image processing unit 130, a computing means (MPU) 150, a storing unit 170, an input/output unit 190, and peripheral devices (not shown). The control means 120 is configured as an occupant information processing unit (CPU) for processing the information about an occupant based on images taken by the 3D camera 112 of the photographing means 110. The control means 120 and the photographing means 110 (the 3D camera 112) cooperate to compose "occupant information detection system" of the present invention.

The image processing unit 130 is a means for controlling the camera to obtain good quality images and for controlling the image processing for processing images taken by the 3D camera 112 to be used for analysis. Specifically, as for the control of the camera, the adjustment of the frame rate, the shutter speed, and the sensitivity, and the accuracy correction are conducted to control the dynamic range, the brightness, and the white balance. As for the control of the image processing, the spin compensation for image, the correction for distortion of the lens, the filtering operation, and the difference operation as image preprocessing operations are conducted and the configuration determination and the trucking as image recognition processing operations are conducted.

The computing means 150 of this embodiment comprises at least an information extraction processing section 151, a conversion processing section 152, a computation processing section 153, and a determination processing section 154. As for the computing means 150, two or more of the information extraction processing section 151, the conversion processing section 152, the computation processing section 153, and the determination processing section 154 may be suitably combined according to the arrangement or function.

The information extraction processing section 151 as a component of the computing means 150 carries out a process of extracting information about three-dimensional surface profile of a detected object on the driver seat based on the three-dimensional image taken by the 3D camera 112. The information extraction processing section 151 corresponds to the "information extraction processing section" of the present invention. Specifically, the information extraction processing section 151 extracts (derives) only image information about upper area of the seat back of the driver seat area from three-dimensional image of the image processing unit 130. The "driver seat area" used here is a peripheral area of the driver seat and is typically defined as a front area and an upper area of the seat back and a head rest or an upper area of a seat cushion.

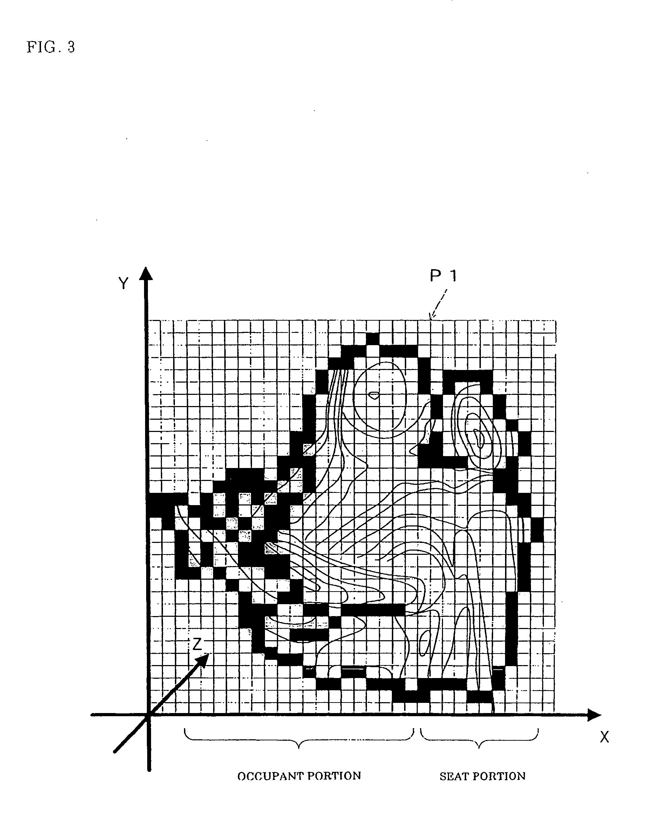

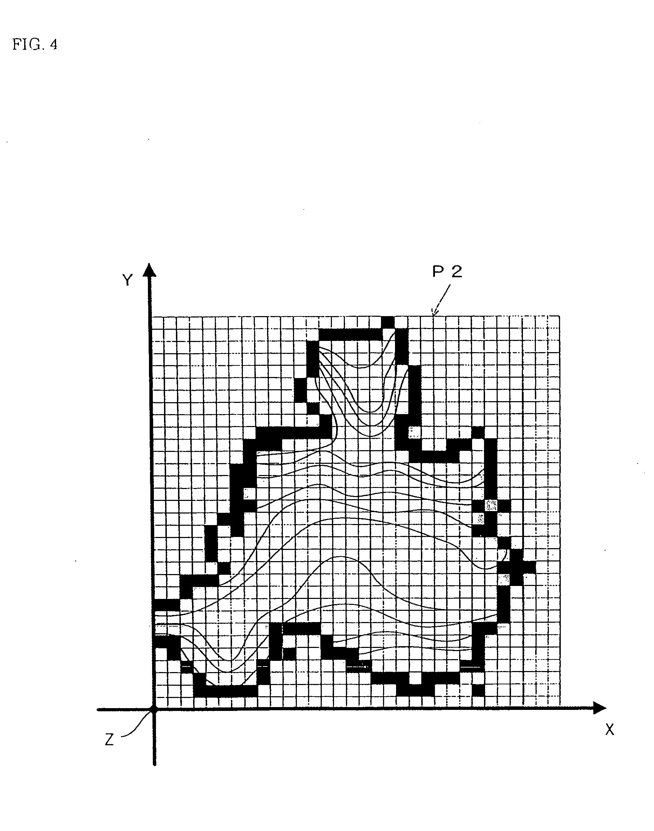

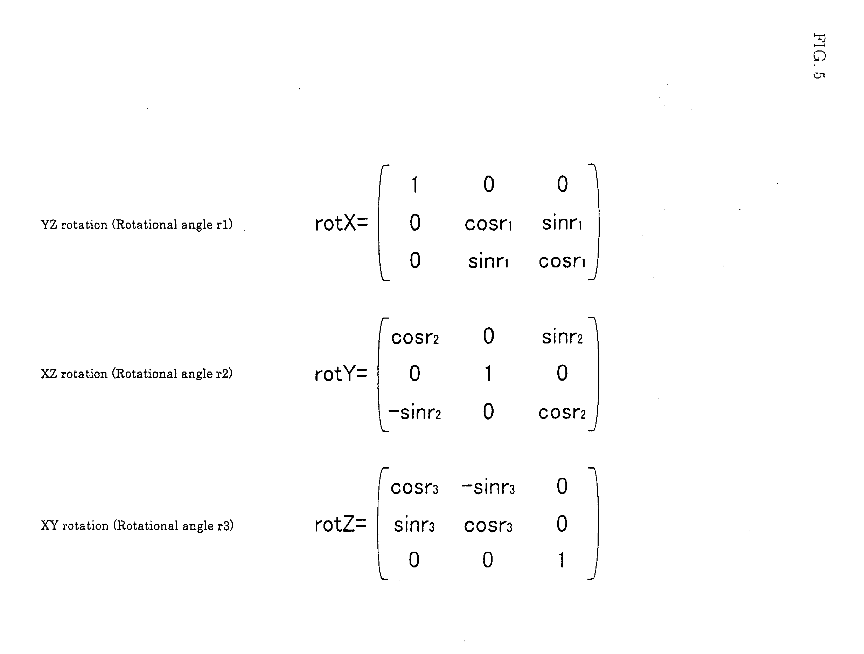

The conversion processing section 152 as a component of the computing means 150 has a function of converting the information extracted by the information extraction processing section 151 into numerical coordinates in a predetermined coordinate system. As the coordinate system, any of various coordinate systems such as an orthogonal coordinate system, a polar coordinate system, a nonorthogonal coordinate system, and a generalized coordinate system may be employed. Fig. 3 shows pixel information P1 in which the information extracted by the information extraction processing section 151 is converted into the numerical coordinates of the orthogonal coordinate system. The conversion processing section 152 also converts the system of coordinates with their origin at the center of the 3D camera 112 into a system of coordinates with their origin at the center of the vehicle body. As the system of coordinates with their origin at the center of the vehicle body, a coordinate system about a view point as seeing the vehicle occupant from the front of the vehicle, a coordinate system about a view point as seeing the vehicle occupant from a side of the vehicle, or a coordinate system about a view point as seeing the vehicle occupant from the top of the vehicle may be employed. Fig. 4 shows pixel information P2 in which the system of coordinates with their origin at the center of the 3D camera 112 is converted into a coordinate system about a view point as seeing the driver P from the front of the vehicle by the conversion processing section 152. It should be noted that this coordinate conversion process is achieved by a rotation matrix shown in Fig. 5. The conversion processing section 152 corresponds to "conversion processing section" of the present invention.

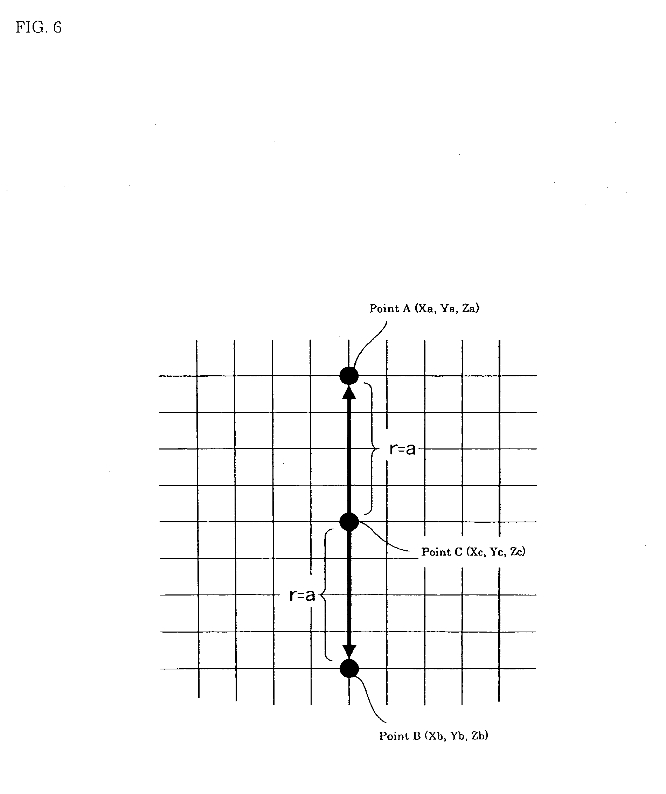

The computation processing section 153 as a component of the computing means 150 computes a contour discriminating value V for discriminating the contour of the driver, using arbitrary three points in the pixel information P2 obtained by the conversion processing section 152. The description about the arbitrary three points in the pixel information P2 of this embodiment will be made with reference to Fig. 6. As shown in Fig. 6, in this embodiment, a point A (Xa, Ya, Za), a point B (Xb, Yb, Zb), and a point C (Xc, Yc, Zc) are set as the arbitrary three points. In this case, the point C is a middle point between the point A and the point B in the three-dimensional surface profile of the driver and the distance between the point A and the point C and the distance between the point C and the point B are equal (distance r = a). In setting these three points, the point C may be set as the middle point after setting the arbitrary point A and the arbitrary point B. Alternatively, the point A and the point B may be set as the both side points after setting the arbitrary point C. The arbitrary point A and the arbitrary point B used here correspond to "arbitrary two points" of the present invention and the point C used here corresponds to "middle point" of the present invention. In addition, the computation processing section 153 corresponds to "computation processing section" of the present invention.

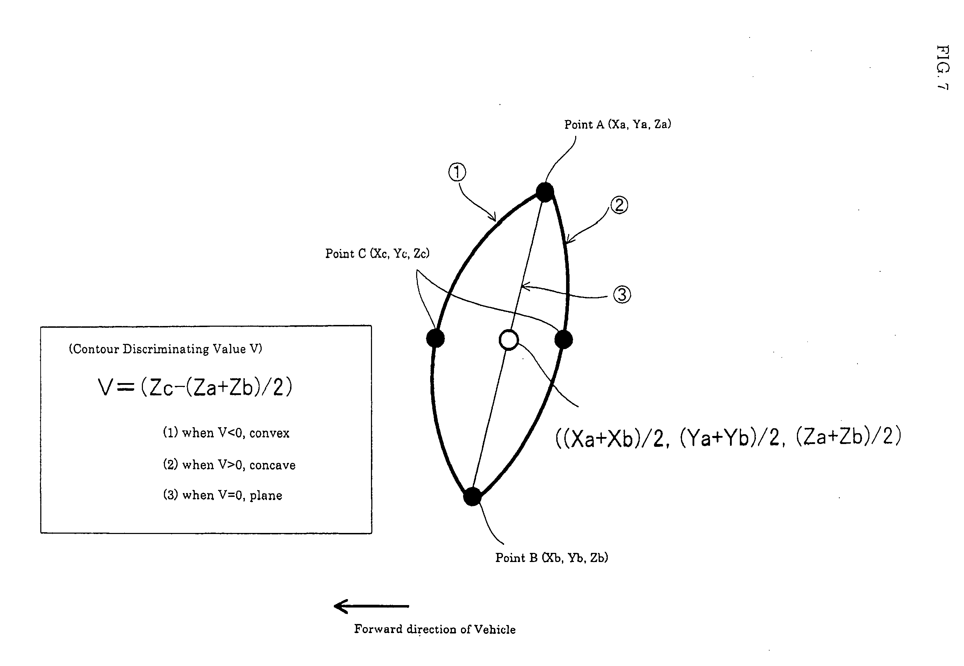

The description about the contour discriminating value V of this embodiment will be made with reference to Fig. 7. As shown in Fig. 7, in this embodiment, distance information of the three points: point A through C, that is, coordinate components on the axis Z of the respective points, i.e. Za, Zb, Zc, are used. The axis Z in this case is a coordinate axis extending between the driver and the 3D camera 112 and thus corresponds to "coordinate axis extending between the detected object and the image detecting section" of the present invention. In this embodiment, a value obtained by subtracting an average of Za and Zb from Zc is defined as the contour discriminating value V. The coordinate component Za, the coordinate component Zb, and the coordinate component Zc used here correspond to "first coordinate component", "second coordinate component", and "third coordinate component" of the present invention, respectively.

The determination processing section 154 as a component of the computing means 150 determines, based on the contour discriminating value V computed by the computation processing section 153, the concavo-convex shape of a line segment formed by the three points A-C. Specifically, when V<0, the determination processing section 154 determines that the line segment formed by the three points A-C forms a convex shape as seen from the front of the vehicle. On the other hand, when V>0, the determination processing section 154 determines that the line segment formed by the three points A-C forms a concave shape as seen from the front of the vehicle. In addition, when V=0, the determination processing section 154 determines that the line segment formed by the three points A-C forms a plane. The determination processing section 154 used here corresponds to "determination processing section" of the present invention.

When the determination processing section 154 determines that the line segment formed by the three points A-C has a convex shape as seen from the 3D camera 112, the contours of the areas around the points A-C are further detected in detail. According to the detected results, it is determined the possibility that the convex shape is a portion of the driver's face. Typically, the computation processing section 153 computes a face confidence value S. The determination processing section 154 determines, based on the face confidence value S, the possibility that the point C is a portion of the driver's face.

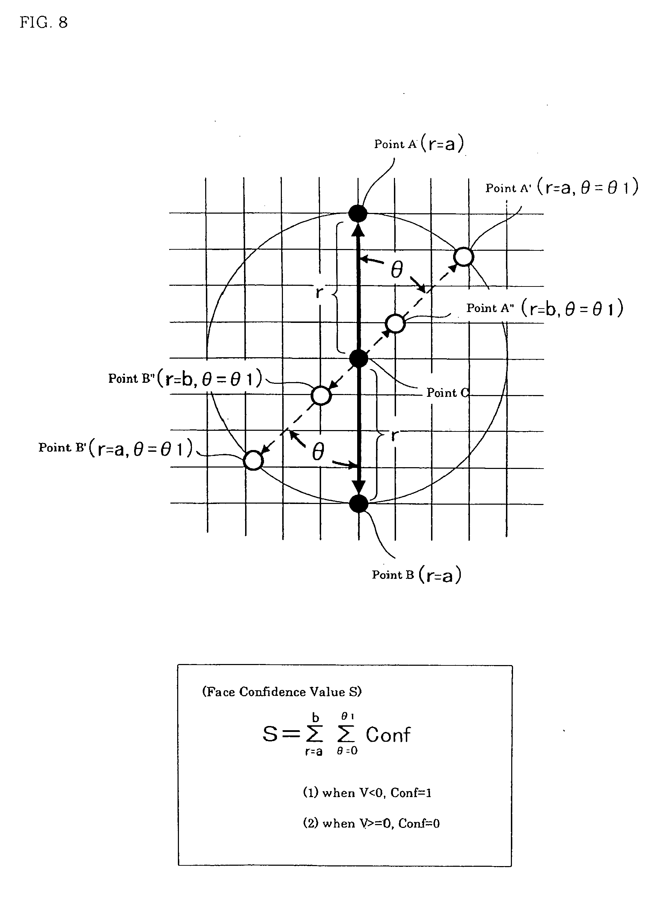

The description about the face confidence value S of this embodiment will be made with reference to Fig. 8. As shown in Fig. 8, in computing the face confidence value S, plural pairs of points which are different from the point A and the point B in radial distance from the point C and/or angle in the rotational direction about the point C are set. For example, a pair of points A' and B' of which radial distance "r" from the point C is "a" and the angle "θ" in the rotational direction about the point C is "θ1" and a pair of points A" and B" of which radial distance "r" from the point C is "b" and the angle "θ" in the rotational direction about the point C is "θ1 " are set. The pair of points A' and B' and the pair of points A" and B" used here correspond to "plural pairs of points which are different from the arbitrary two points in radial distance from the middle point and/or angle in the rotational direction about the middle point" of the present invention. It should be understood that, in setting the plural pairs of points, the plural pairs of points may be different from the arbitrary two points with regard to at least of one of the radial distance from the point C and the angle in the rotational direction about the point C.

The computation processing section 153 computes the contour discriminating values V in the aforementioned manner using points with varying the radial distance from the point C and the angle in the rotational direction about the point C. The computation process is based on the idea that the vehicle occupant's face is round or oval and a convex shape as seen from the 3D camera 112 (the front of the vehicle) is highly likely a portion of a vehicle occupant's face. The computation process corresponds to "second computation step" of the present invention.

The radial distance "r" from the point C is preferably set within a certain distance previously defined according to the general face size of a vehicle occupant. This can prevent useless work of computing a contour discriminating value V of a convex shape other than the vehicle occupant's face with regard to points out of the range of the general face size. In case that a contour discrimination value V is computed with regard to points out of the range of the general face size of vehicle occupant, it is determined that the detected convex is quite unlikely a portion of the vehicle occupant's face when the contour discriminating value V obtained with regard to points over the certain distance. In this case, a process of reducing the face confidence value S as will be described is taken. The angle θ in the rotational direction about the point C is preferably set within a range of from 180° to 360°.

By using the contour discriminating values V obtained using points with varying the radial distance from the point C and the angle in the rotational direction about the point C and assuming that additional function is Conf=1 when V<0 and additional function is Conf=0 when V≥0, the sum of the additional functions represents the face confidence value S. The determination processing section 154 determines that the point C forms a part of information of the driver's face when the face confidence value S exceeds a predetermined threshold because the frequency of line segments forming a convex shape as seen from the 3D camera disposed in a front portion of the vehicle is relatively high. The determination process corresponds to "second determination step" of the present invention. This arrangement can improve the detection accuracy of information of the vehicle occupant's face. In the determination of the second determination step, another parameter other than the face confidence value S, for example, the degree (number) of line segments forming a convex shape as seen from 3D camera 112 disposed in the front portion of the vehicle or the percentage of the line segments occupying the entire line segments may be employed.

The order that the computation processing section 153 sets arbitrary three points in the image information P2 obtained by the conversion processing section 152 is preferably from the upper side to the lower side of the vehicle. In this case, the determination processing section 154 determines the position of the vehicle occupant's face based on the position of the point C which is first determined as a point forming a part of information of the vehicle occupant's face in the aforementioned second determination step. The computation process and the determination process are based on the idea that the vehicle occupant's face is the uppermost part of body parts of the vehicle occupant so that the order of from the upper side to the lower side of the vehicle in detection enables early detection of the vehicle occupant's face. This determination process corresponds to "third determination step" of the present invention. This arrangement is reasonable because the computation processing load and the storage capacity to be required to detect information of the vehicle occupant's face can be reduced.

The determination processing section 154 determines the physique and the attitude of the vehicle occupant based on the position of the vehicle occupant's face determined in the aforementioned third determination step. This determination process corresponds to "fourth determination step" of the present invention. This arrangement enables precise and easy detection of information about the physique and the attitude of the vehicle occupant, using information about the position of the vehicle occupant's face.

Returning to Fig. 1; the storing unit 170 of this embodiment is a means for storing (recording) data for correction, buffer frame memory for preprocessing, defined data for recognition computing, reference patterns, and the computed results of the computing means 150 as well as an operation control software.

The input/output unit 190 of this embodiment outputs control signal to the occupant restraint device 200 according to the information in the storing unit 170. The occupant restraint device 200 is composed of one or some of occupant restraint devices such as an airbag device (airbag module) and a seat belt device which operate for restraining a vehicle occupant in the event of a vehicle collision. The occupant restraint device 200 corresponds to "occupant restraint device" of the present invention. The occupant restraint device 200 is controlled its mode of restraining the vehicle occupant based on the information outputted from the input/output unit 190. Specifically, the occupant restraint device 200 restrains the vehicle occupant in a suitable mode according to the position of the face, the physique and the attitude of the vehicle occupant detected. If necessary, a warning device (display, sound or the like) may be placed in addition to the occupant restraint device 200.

In case that the occupant restraint device 200 is an airbag module comprising an inflator (gas supplying means) and an airbag, the inflator is actuated according to a control signal from the input/output unit 190 to supply gas for deployment and inflation into the airbag such that the pressure and flow rate of gas supplied from the inflator to the airbag is variable according to the information about the physique of the driver P. Therefore, the restraining performance (occupant restraining mode) by the airbag which is deployed and inflated into an occupant restraining area can be changed according to the physique of the vehicle occupant.

It should be noted that an ECU for controlling the entire vehicle may be provided between the input/output unit 190 and the occupant restraint device 200. This arrangement enables the ECU to output control signals to the occupant restraint device 200 based on information about the vehicle, information about traffic conditions around the vehicle, information about weather condition and about time zone as well as the determination results by the determination processing section 154. As the information about the vehicle, there are, for example, collision prediction information of the vehicle by a radar or camera, the state (open or closed) of a vehicle door, the wearing of the seat belt, the operation of brakes, the vehicle speed, and the steering angle.

According to this embodiment as mentioned above, in a system of detecting a vehicle occupant, it is possible to precisely detect information about a face of a vehicle occupant on a vehicle seat with reduced computation processing load and reduced storage capacity by focusing on information specific to the face of the vehicle occupant from information obtained from three-dimensional image of the vehicle occupant on the vehicle seat and determining the concavo-convex shape formed by arbitrary three points in the converted numerical coordinates, for the purpose of locating the face.

According to this embodiment, an occupant restraint system 100 which is effective for promoting complete restraint of a vehicle occupant and a vehicle with the occupant restraint system 100 can be provided.

### (Other embodiments)

The present invention is not limited to the aforementioned embodiments and various applications and modifications may be made. For example, the following respective embodiments based on the aforementioned embodiments may be carried out.

In the present invention, the second computation step by the computation processing section 153, or the second determination step, the third determination step or the fourth determination step by the determination processing section 154 may be omitted, if required.

The aforementioned embodiment has been described with reference to a case that the information about the vehicle occupant's face detected by the occupant information detection system which comprises the photographing means 110 and the control means 120 is used for controlling the occupant restraint device 200, the information about the vehicle occupant's face may also be used for controlling other operation device except the occupant restraint device 200 in the present invention.

The aforementioned embodiment has been described with reference to the occupant restraint system 100 installed for restraining the vehicle occupant in the driver seat, the occupant restraint device of the present invention may be an occupant restraint device for restraining a vehicle occupant in a front passenger seat or a rear seat as well as the driver seat. In this case, the 3D camera 112 as the photographing means is placed to a suitable vehicle part such as an instrument panel, a pillar, a door, a windshield, and a seat in a front portion of an automobile.

The aforementioned embodiment has been described with reference to a case of deriving information of the face of a vehicle occupant sitting directly in a driver seat or vehicle seat, the present invention may be applied to an arrangement for deriving information about a face of a vehicle occupant sitting indirectly in the vehicle seat via an inclusion such as a child seat or a junior seat.

Though the aforementioned embodiments have been described with regard to the arrangement of the occupant restraint system to be installed in an automobile, the present invention can be adapted to occupant restraint devices to be installed in various vehicles such as an automobile, an airplane, a boat, a train, a bus, and a truck.

## Claims

1. An occupant information detection system for detecting information about a vehicle occupant (P) on a vehicle seat (10), comprising:
an image detecting section (110) which is disposed to face to a vehicle seat area for taking a three-dimensional image;
an information extraction processing section (151) for extracting information about a three-dimensional surface profile of a detected object on the vehicle seat (10) based on the three-dimensional image taken by said image detecting section;
a conversion processing section (152) for converting the information extracted by said information extraction processing section into numerical coordinates of a predetermined coordinate system;
a computation processing section (153) for deriving a computed value (V) by subtracting an average of first and second coordinate components (Za, Zb) from a third coordinate component (Zc), wherein said first and second coordinate components (Za, Zb) are arbitrary two points (A, B) and said third coordinate component (Zc) is a middle point (C) of said arbitrary points (A, B) with regard to coordinate components of a coordinate axis extending between said detected object and said image detection section (110) in the numerical coordinates converted by the conversion processing section (152); and
a determination processing section (154) for determining, based on the computed value (V) derived by the computation processing section (153), the concavo-convex shape of a line segment (A-C) formed by the arbitrary points (A, B) and the middle point (C), wherein
said determination processing section (154) determines that said line segment (A-C) forms a convex shape as seen from said image detecting section (110) when said computed value (V) is minus, that said line segment (A-C) forms a concave shape as seen from said image detecting section (110) when said computed value (V) is plus, and that said line segment (A-C) forms a plane when said computed value (V) is zero.

2. An occupant information detection system as claimed in claim 1, wherein
said computation processing section (153) has a second computation step in which, when said determination processing section (153) determines that the line segment (A-C) formed by said arbitrary two points (A, B) and said middle point (C) forms a convex shape as seen from said image detecting section (110), said computation processing section (153) sets further plural pairs of points (A', A", B', B") which are different from said arbitrary two points (A, B) in radial distance (r) from said middle point (C) and/or angle (θ) in the rotational direction about said middle point (C) and derives each computed value (V) associated with two points (A, B; A', B'; A", B") of each pair and said middle point (C) by subtracting an average of first and second coordinate components of the two points (A, B; A', B'; A", B") from said third coordinate component of said middle point (C), and
said determination processing section (154) has a second determination step in which said determination processing section (154) determines, based on each computed value (V) derived by said computation processing section (153), the concavo-convex shape of a line segment formed by the two points (A, B; A', B'; A", B") of each pair and said middle point (C), wherein said determination processing section (154) determines that said middle point (C) forms information of a face of the vehicle occupant (P) when a frequency of line segments forming a convex shape as seen from said image detecting section (110) is high.

3. An occupant information detection system as claimed in claim 2, wherein
in said second computation step, said computation processing section (153) limits the radial distance (r) from said middle point (C) to be in a certain range of distance which is previously defined according to the size of a vehicle occupant's face.

4. An occupant information detection system as claimed in claim 2 or 3, wherein
said computation processing section (153) sets said arbitrary two points (A, B) and said middle point (C) with regard to said detected object in the order of from the upper side to the lower side of the vehicle, and
said determination processing section (154) has a third determination step in which said determination processing section (154) determines the position of the face of the vehicle occupant (P) based on the position of the middle point (C) which is first determined as a point forming a part of information of the vehicle occupant's face in said second determination step.

5. An occupant information detection system as claimed in claim 4, wherein
said determination processing section (153) has a fourth determination step in which said determination processing section (153) determines the physique and the attitude of said vehicle occupant (P) based on the position of the face of said vehicle occupant (P) determined in said third determination step.

6. An occupant restraint system comprising:
an occupant information detection system as claimed in claim 5;
an occupant restraint device (200) for restraining a vehicle occupant (P) in the event of a vehicle collision; and
a control device for changing the restraining mode by said occupant restraint device (200) according to the physique and the attitude of said vehicle occupant (P) determined in said fourth determination step by said determination processing section (154).

7. A vehicle comprising:
an engine/running system;
an electrical system;
an actuation control device for controlling the actuation of said engine/running system and said electrical system;
a vehicle seat (10);
an image detecting device (110) which is disposed to face to said vehicle seat (10) for taking a three-dimensional image; and
a processing device for processing information obtained by said image detecting device in said actuation control device, wherein
said processing device has an occupant information detection system as claimed in any one of claims 1 through 5.
